# DEMANDE DE BREVET EUROPEEN

(11) **EP 2 523 391 A1**
(43) Date de publication de la demande: **14.11.2012**
(21) Numéro de dépôt: 11305550.3
(22) Date de dépôt: 09.05.2011
(51) Int. Cl.: H04L 12/24, H04L 12/56, G06F 9/445

(54) **Procédé et dispositif de gestion automatisée des opérations de maintenance de noeuds d'un réseau de communication**

(71) Demandeur: Alcatel Lucent, 75007 Paris (FR)
(72) Inventeur: Ghamri-Doudane, Samir, 91620 Nozay (FR); Ciavaglia, Laurent, 91620 Nozay (FR)
(74) Mandataire: Sciaux, Edmond

(57) **Abrégé**

Un procédé est dédié à la gestion d'opérations de maintenance, au moyen d'un mécanisme choisi, dans un groupe prédéfini de noeuds (N1-N5) d'un réseau de communication (RC), reliés entre eux et participant à un processus décisionnel global de routage. Ce procédé comprend les étapes suivantes: (i) transmettre de chaque noeud (N1-N5) du groupe à chacun de ses noeuds premiers voisins un premier message contenant la valeur courante d'une métrique choisie, (ii) choisir comme prochain noeud (N3) du groupe devant faire l'objet d'opérations de maintenance au moins un noeud qui a la valeur courante de métrique la plus, ou la moins, élevée de tous ses noeuds premiers voisins au sein du groupe, et (iii) transmettre de chaque noeud choisi (N3) à chacun de ses noeuds premiers voisins (N2-N5) un deuxième message signalant qu'il sera le prochain à effectuer ses opérations de maintenance, puis interrompre momentanément la participation au processus du noeud choisi (N3) et déclencher ses opérations de maintenance au moyen du mécanisme choisi lorsque son tour survient.

## Description

### Domaine technique

L'invention concerne les réseaux de communication qui comprennent des noeuds reliés entre eux et pouvant faire l'objet d'opérations de maintenance tout en continuant à transférer des messages de données numériques.

On entend ici par "opérations de maintenance" tout type d'intervention permettant de modifier le fonctionnement d'un noeud ou d'une partie d'un noeud et/ou de réparer un noeud ou une partie d'un noeud, alors même que le plan de données (ou "data plane") de ce noeud continue de fonctionner. Par conséquent, il pourra s'agir d'une mise à jour de logiciel(s), d'un ajout de logiciel, d'une correction d'erreur(s), d'une ré-initialisation ou d'une intervention sur des composants ("ou hardware").

### Etat de l'art

Comme le sait l'homme de l'art, certains noeuds de certains réseaux de communication sont agencés de manière à mettre en oeuvre un mécanisme qui leur permet momentanément de ne plus participer au processus décisionnel global de routage afin de faire l'objet d'opérations de maintenance tout en continuant à transférer des messages de données numériques, puis de pouvoir participer de nouveau à ce processus sans que cela n'influence ce dernier.

C'est notamment le cas du mécanisme appelé "Open Shortest Path First - Graceful Restart" (ou OSPF-GR - redémarrage sans impact ou sans interruption de transfert) qui est défini par la règle RFC 3623 de l'IETF. Il est rappelé que le mécanisme OSPF-GR permet au plan de données (ou data plane) d'un noeud qui fait l'objet d'opérations de maintenance de continuer à transférer "normalement" les messages qui lui parviennent sans que les autres noeuds qui ne sont pas leurs premiers voisins ne le sache. Pour ce faire, les noeuds premiers voisins d'un premier noeud qui fait l'objet d'opérations de maintenance annoncent aux autres noeuds que ce premier noeud est toujours présent (et donc fonctionne normalement), afin d'éviter une re-convergence du processus de routage, puis permettent à ce premier noeud de se re-synchroniser une fois que ses opérations de maintenance sont terminées. De ce fait, les noeuds premiers voisins sont appelés assistants (ou "helpers"). Cela permet de minimiser les besoins en matière de re-convergence de routage, et ainsi de minimiser l'influence de la maintenance sur le trafic d'un réseau de communication. Ce mécanisme comprend une première phase dite d'initialisation, dans laquelle un premier noeud devant faire l'objet d'opérations de maintenance signale à ses premiers voisins qu'il va bientôt ne plus leur répondre pendant une durée maximale d'absence (ou "grace period"), une deuxième phase dite de redémarrage (ou "restarting") pendant laquelle on effectue des opérations de maintenance sur le premier noeud alors que dans le même temps ses noeuds premiers voisins continuent d'annoncer aux autres noeuds du réseau que le premier noeud est toujours présent et donc participe au routage, et une troisième phase dite de re-synchronisation pendant laquelle le premier noeud re-contacte ses noeuds premiers voisins pour mettre à jour ses informations d'états de lien pour se re-synchroniser et ainsi participer de nouveau au processus décisionnel global de routage.

### Résumé de l'invention

Actuellement, la planification des opérations de maintenance au sein d'un groupe de noeuds doit être effectuée manuellement par un spécialiste et la mise en oeuvre de cette planification est effectuée soit manuellement in situ par un intervenant, soit par envoi de commandes à distance, par exemple via une interface de ligne de commande, soit encore par un déclenchement à distance du mécanisme OSPF-GR dans chaque noeud. Ce mode de fonctionnement partiellement manuel présente au moins deux inconvénients. En effet, la planification des opérations de maintenance étant effectuée manuellement, et non pas calculée automatiquement, elle peut s'avérer non optimale, et peut induire des coûts opérationnels élevés (notamment en raison des temps d'intervention et des erreurs non résolues ou rajoutées). Par ailleurs, les opérations de maintenance étant ni automatisées, ni coordonnées, y compris lorsque l'on utilise le mécanisme OSPF-GR, elles peuvent s'avérer assez lentes, voire incomplètes.

L'invention a donc pour but d'améliorer la situation, et plus précisément de permettre un calcul automatisé et distribué de la planification des opérations de maintenance au sein d'un groupe de noeuds, et une coordination automatique et distribuée du déclenchement des opérations de maintenance.

Selon un premier aspect, l'invention propose un procédé, dédié à la gestion d'opérations de maintenance, au moyen d'un mécanisme choisi, dans un groupe prédéfini de noeuds d'un réseau de communication, reliés entre eux et participant à un processus décisionnel global de routage, et comportant les étapes suivantes:
(i) transmettre de chaque noeud du groupe à chacun de ses noeuds premiers voisins un premier message contenant la valeur courante (locale) d'une métrique choisie,
(ii) choisir comme prochain noeud du groupe devant faire l'objet d'opérations de maintenance au moins un noeud qui a la valeur courante de métrique la plus élevée (ou au contraire la moins élevée) de tous ses noeuds premiers voisins au sein du groupe, et
(iii) transmettre de chaque noeud choisi à chacun de ses noeuds premiers voisins un deuxième message signalant qu'il sera le prochain noeud à faire l'objet d'opérations de maintenance, puis interrompre momentanément la participation au processus du noeud choisi et déclencher ses opérations de maintenance au moyen du mécanisme choisi lorsque son tour survient.

Le procédé peut comporter d'autres caractéristiques qui peuvent être prises séparément ou en combinaison, et notamment:
- le mécanisme choisi peut être de type dit "Open Shortest Path First - Graceful Restart" (ou OSPF-GR);
   ➢ à l'étape (i) chaque noeud du groupe peut générer un premier message de type "Grace - Link State Advertisement" (ou Grace-LSA) comportant un champ dédié additionnel de type Type-Length-Value (ou TLV) comprenant une valeur égale à sa valeur courante de métrique;
- on peut prévoir une étape (iv) dans laquelle chaque noeud premier voisin d'un noeud choisi peut transmettre à chacun de ses noeuds premiers voisins un troisième message signalant qu'il va servir d'assistant (ou "helper") au redémarrage du noeud choisi;
   ➢ on peut prévoir une étape (v) dans laquelle, lorsqu'un noeud du groupe reçoit un troisième message d'un autre noeud de ce groupe, qui est un premier voisin d'un noeud choisi, il peut supprimer ce dernier noeud d'une liste qui désigne ses noeuds premiers voisins devant faire l'objet d'opérations de maintenance, puis il peut déterminer si sa valeur courante de métrique est la plus, ou la moins, élevée parmi celles des noeuds restant qui sont encore désignés dans cette liste, et dans l'affirmative il peut effectuer l'étape (iii), ou bien dans la négative il peut attendre la réception d'un nouveau deuxième ou troisième message;
- à l'étape (ii) chaque noeud du groupe peut comparer sa valeur courante de métrique aux valeurs courantes de métrique de ses noeuds premiers voisins au sein du groupe, qui n'ont pas encore effectué leurs opérations de maintenance;
- à l'étape (ii), lorsque au moins deux noeuds premiers voisins du groupe sont associés à des identifiants de communication différents et ont une même valeur courante de métrique, et que cette même valeur courante est la plus, ou la moins, élevée, on peut choisir comme prochain noeud du groupe devant faire l'objet d'opérations de maintenance celui qui est associé au plus petit identifiant de communication;
- à l'étape (i), une fois qu'un noeud du groupe a transmis son premier message à ses noeuds premiers voisins, il peut attendre pendant une durée prédéfinie avant d'effectuer l'étape (ii), de manière à recevoir les valeurs courantes de métrique de ses noeuds premiers voisins.

Selon un deuxième aspect, l'invention propose un dispositif, dédié à la gestion d'opérations de maintenance, au moyen d'un mécanisme choisi, pour un noeud d'un groupe prédéfini de noeuds d'un réseau de communication, reliés entre eux et participant à un processus décisionnel global de routage, et agencé:
- pour ordonner à son noeud de transmettre à chacun de ses noeuds premiers voisins un premier message contenant la valeur courante d'une métrique choisie,
- pour comparer la valeur courante de métrique de son noeud aux valeurs courantes de métrique de ses noeuds premiers voisins au sein du groupe, qui n'ont pas encore effectué leurs opérations de maintenance, afin d'élire ce noeud prochain noeud devant faire l'objet d'opérations de maintenance lorsque sa valeur courante de métrique est la plus élevée (ou au contraire la moins élevée), et
- pour ordonner à son noeud de transmettre à chacun de ses noeuds premiers voisins un deuxième message signalant qu'il sera le prochain à faire l'objet d'opérations de maintenance, puis pour interrompre momentanément la participation de son noeud au processus et déclencher ses opérations de maintenance au moyen du mécanisme choisi lorsque son tour survient.

Le dispositif peut comporter d'autres caractéristiques qui peuvent être prises séparément ou en combinaison, et notamment:
- il peut être agencé pour déclencher des opérations de maintenance de son noeud au moyen d'un mécanisme choisi de type dit "Open Shortest Path First - Graceful Restart";
   ➢ il peut être agencé pour fournir à son noeud sa valeur courante de métrique afin qu'il l'intègre à un premier message de type "Grace - Link State Advertisement" dans un champ dédié additionnel de type Type-Length-Value;
- il peut être agencé, lorsque son noeud est un noeud premier voisin d'un prochain noeud, pour ordonner à son noeud de transmettre à chacun de ses noeuds premiers voisins un troisième message signalant qu'il va servir d'assistant (ou "helper") au redémarrage d'un prochain noeud;
   ➢ il peut être agencé, lorsque son noeud reçoit un troisième message d'un autre noeud du groupe, qui est un premier voisin d'un noeud choisi, pour supprimer ce dernier d'une liste qui désigne ses noeuds premiers voisins devant faire l'objet d'opérations de maintenance, puis pour déterminer si sa valeur courante de métrique est la plus, ou la moins, élevée parmi celles des noeuds restant qui n'ont pas encore été désignés dans cette liste, et dans l'affirmative pour ordonner à son noeud de transmettre à chacun de ses noeuds premiers voisins un deuxième message signalant qu'il sera le prochain à effectuer ses opérations de maintenance, puis pour interrompre momentanément la participation de son noeud au processus et déclencher ses opérations de maintenance au moyen du mécanisme choisi lorsque son tour survient, ou bien dans la négative pour attendre la réception par son noeud d'un nouveau deuxième ou troisième message;
- il peut être agencé, lorsque son noeud présente une valeur courante de métrique identique à celle d'au moins un autre noeud premier voisin de son groupe, et que cette valeur courante est la plus, ou la moins, élevée, pour élire son noeud prochain noeud devant faire l'objet d'opérations de maintenance lorsqu'il est associé à un identifiant de communication qui est le plus petit de tous les identifiants de communication de ses noeuds premiers voisins au sein du groupe.

Selon un troisième aspect, l'invention propose un équipement de réseau, propre à constituer un noeud d'un réseau de communication et à être relié à d'autres noeuds de ce dernier qui participe à un processus décisionnel global de routage, et comprenant un dispositif de gestion du type de celui présenté ci-avant.

### Brève description des dessins

D'autres caractéristiques et avantages de l'invention apparaîtront à l'examen de la description détaillée ci-après, de l'annexe et des dessins annexés, sur lesquels:

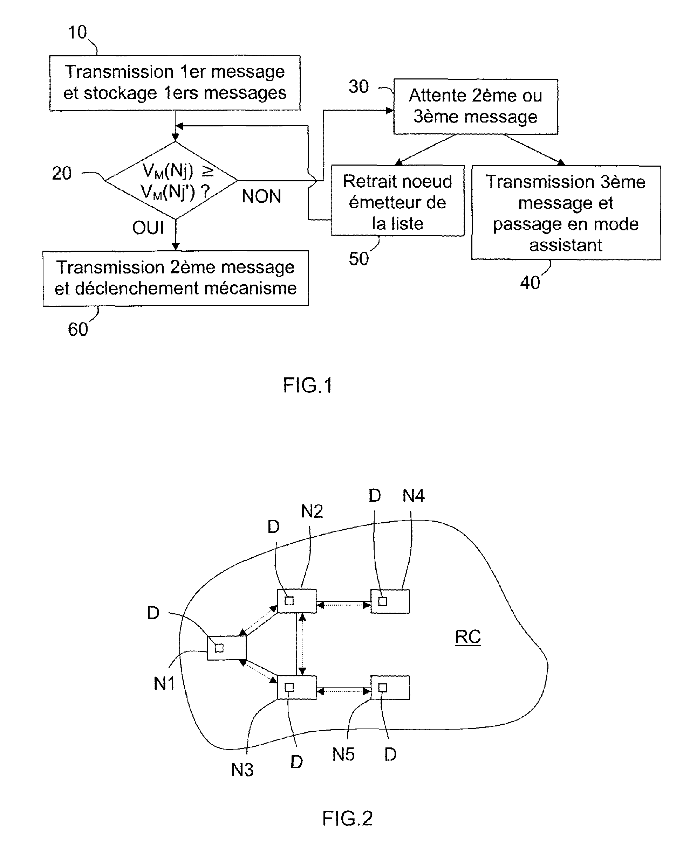

- la figure 1 illustre de façon algorithmique un exemple de mise en oeuvre d'un procédé de gestion selon l'invention,
- la figure 2 illustre de façon schématique et fonctionnelle un exemple de réseau de communication comprenant un groupe de cinq noeuds, reliés entre eux par des liaisons, équipés chacun d'un dispositif de gestion selon l'invention, et devant faire l'objet d'opérations de maintenance; les flèches à double sens en pointillés matérialisant les échanges de premiers messages entre noeuds,

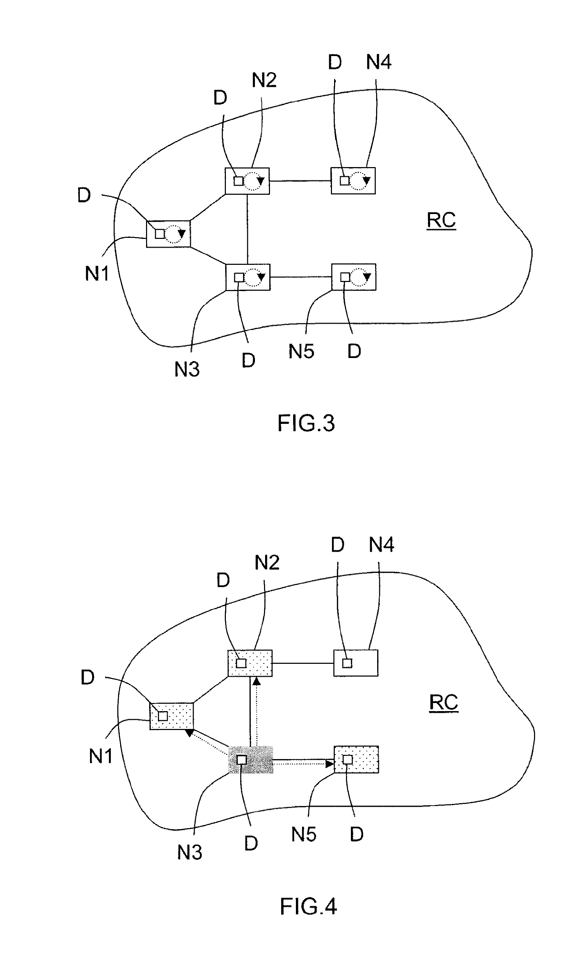

- la figure 3 illustre de façon schématique et fonctionnelle le réseau de communication de la figure 2 pendant la phase de détermination d'au moins un prochain noeud devant faire l'objet d'opérations de maintenance; les flèches circulaires en pointillés matérialisant chaque détermination locale,
- la figure 4 illustre de façon schématique et fonctionnelle le réseau de communication de la figure 2 durant la phase au cours de laquelle un prochain noeud devant faire l'objet d'opérations de maintenance transmet à ses noeuds premiers voisins un deuxième message destiné à signaler son prochain état; les flèches en pointillés matérialisant chaque transmission d'un deuxième message,

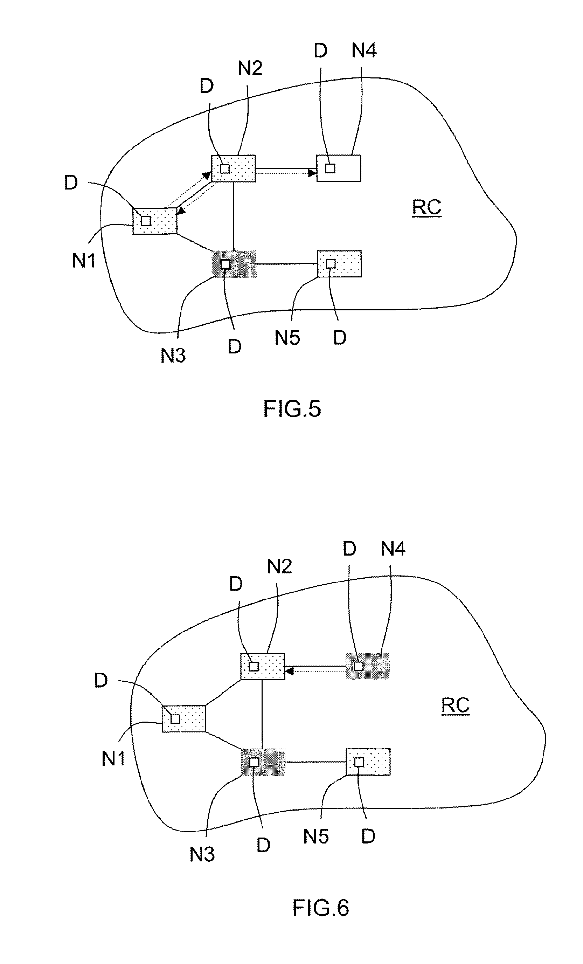

- la figure 5 illustre de façon schématique et fonctionnelle le réseau de communication de la figure 2 durant la phase au cours de laquelle chaque noeud premier voisin d'un prochain noeud devant faire l'objet d'opérations de maintenance transmet à ses noeuds premiers voisins un troisième message destiné à signaler son prochain état d'assistant (ou helper); les flèches en pointillés matérialisant chaque transmission d'un troisième message,
- la figure 6 illustre de façon schématique et fonctionnelle le réseau de communication de la figure 2 durant la phase au cours de laquelle un autre noeud du groupe a découvert qu'il pouvait être un autre noeud devant faire prochainement l'objet d'opérations de maintenance et donc transmet à ses noeuds premiers voisins un deuxième message destiné à signaler son prochain état; la flèche en pointillés matérialisant la transmission d'un deuxième message, et

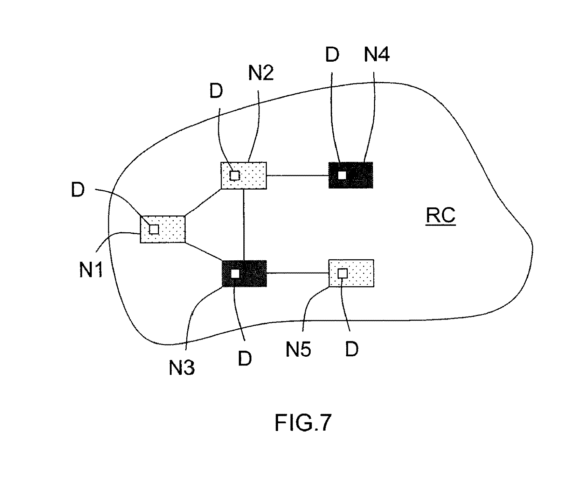

- la figure 7 illustre de façon schématique et fonctionnelle le réseau de communication de la figure 2 durant la phase au cours de laquelle on effectue des opérations de maintenance des deux noeuds déterminés au sein du groupe.

Les dessins annexés pourront non seulement servir à compléter l'invention, mais aussi contribuer à sa définition, le cas échéant.

### Description détaillée

L'invention a notamment pour objet de permettre un calcul automatisé et distribué de la planification des opérations de maintenance au sein d'un groupe prédéfini de noeuds (Nj) d'un réseau de communication (RC), et une coordination automatique et distribuée du déclenchement des opérations de maintenance au sein des noeuds (Nj) de ce groupe.

On considère dans ce qui suit, à titre d'exemple illustratif, que le réseau de communication (RC) est un réseau à protocole Internet (IP) et à plan de contrôle MPLS ("Mufti Protocol Label Switching"). Ce réseau (RC) est donc agencé de manière à router ou commuter des étiquettes (ou « labels ») affectés, par exemple, à des paquets IP. Mais, l'invention n'est pas limitée à ce type de réseau de communication. Elle concerne en effet n'importe quel réseau de communication dans lequel peut être mis en oeuvre un protocole de routage, éventuellement de type OSPF ("Open Shortest Path First").

On a schématiquement illustré sur les figures 2 à 7, une toute petite partie d'un réseau (de communication) RC comportant au moins un groupe prédéfini de noeuds Nj reliés les uns aux autres par des liaisons physiques ou logiques considérées par le processus décisionnel global de routage comme un lien direct, et associés chacun à un dispositif de gestion D selon l'invention. On considère ici que les noeuds Nj du groupe prédéfini sont tous des routeurs. Mais, certains au moins des noeuds Nj pourraient être des équipements de réseau d'un autre type, et notamment des commutateurs. Tous ces noeuds Nj sont agencés de manière à participer à un processus décisionnel global de routage, ici au moyen du protocole de routage OSPF (à titre d'exemple non limitatif).

On notera que dans l'exemple illustré sur les figures 2 à 7, le groupe prédéfini comprend cinq noeuds N1 à N5 (j = 1 à 5). Mais, il pourrait comprendre plus ou moins de cinq noeuds, l'important étant qu'il en comprenne au moins deux.

L'invention propose notamment de mettre en oeuvre au sein d'au moins un groupe prédéfini de noeuds Nj d'un réseau RC un procédé dédié à la gestion d'opérations de maintenance de ces noeuds Nj. Les noeuds qui constituent un groupe objet d'une maintenance sont choisis par un technicien ou bien automatiquement par un équipement de réseau en charge de la gestion des noeuds.

Un tel procédé comprend au moins trois étapes (i), (ii) et (iii).

Une première étape (i) consiste à transmettre de chaque noeud Nj du groupe (prédéfini) à chacun de ses noeuds premiers voisins Nj' (j' ≠j) un premier message contenant la valeur courante d'une métrique choisie V_{M}(Nj).

On entend ici par "noeud premier voisin" un noeud qui est connecté directement à un autre noeud par une liaison physique ou logique considérée par le processus de routage comme un lien direct. Ainsi, dans l'exemple non limitatif de groupe illustré sur les figures 2 à 7, les noeuds N2 et N3 sont des noeuds premiers voisins du noeud N1, les noeuds N1, N2 et N5 sont des noeuds premiers voisins du noeud N3, les noeuds N1, N3 et N4 sont des noeuds premiers voisins du noeud N2, le noeud N2 est le noeud premier voisin du noeud N4, et le noeud N3 est le noeud premier voisin du noeud N5.

Il est important de noter que les noeuds premiers voisins d'un noeud Nj d'un groupe (prédéfini et donc dont tous les noeuds sont concernés par une maintenance) ne font pas tous obligatoirement partie de ce même groupe. On considère cependant dans ce qui suit que les noeuds premiers voisins d'un noeud Nj d'un groupe font tous partie de ce même groupe.

Il est également important de noter que l'invention ne peut être mise en oeuvre qu'à condition que tous les noeuds Nj d'un groupe disposent de métriques de même type, comparables entre elles.

Tout type de métrique connue de l'homme de l'art et pouvant prendre des valeurs différentiables peut être utilisée. A titre d'exemples non limitatifs, la métrique peut être le nombre de premiers voisins (ou degré) d'un noeud, ou un paramètre représentatif d'un niveau de priorité d'un noeud, attribué par l'opérateur du réseau RC, ou encore un identifiant de communication d'un noeud (comme par exemple une adresse IP ou un identifiant OSPF (par exemple de type "router-id")).

On comprendra que la valeur courante de la métrique choisie peut être une constante stockée dans le noeud Nj considéré, notamment dans le cas d'un niveau de priorité ou d'une adresse IP, ou bien une valeur pouvant varier au cours du temps, notamment dans le cas du nombre de premiers voisins (ou degré). Par conséquent, une phase préliminaire de recherche de la valeur courante de la métrique choisie peut être éventuellement nécessaire pour qu'un premier message puisse être généré localement par un noeud Nj. Cette recherche peut être effectuée localement dans un noeud par le dispositif de gestion D qui lui est associé.

On entend ici par "associé" aussi bien le fait de faire partie intégrante d'un noeud Nj, comme illustré, que le fait d'être couplé directement ou indirectement à un noeud Nj. Par conséquent, un dispositif de gestion D peut être réalisé sous la forme de modules logiciels (ou informatiques) ou bien d'une combinaison de circuits électroniques et de modules logiciels.

On notera qu'au sein d'un noeud Nj, une première étape (i) peut être initiée par le dispositif (de gestion) D associé lorsqu'il a été informé que son noeud Nj devait faire l'objet d'opérations de maintenance. Dans ce cas, le dispositif D d'un noeud Nj est agencé pour ordonner à ce noeud Nj de transmettre à chacun de ses noeuds premiers voisins Nj' un premier message qui contient la valeur courante de la métrique choisie V_{M}(Nj) qu'il lui fournit (éventuellement après avoir effectué une recherche).

La première étape (i) est matérialisée par le rectangle référencé 10 dans l'exemple d'algorithme illustré sur la figure 1.

On comprendra que tous les noeuds Nj d'un groupe vont transmettre à leurs noeuds premiers voisins un premier message contenant leur valeur courante de métrique V_{M}(Nj). Par conséquent, chaque noeud Nj d'un groupe reçoit les valeurs courantes de métrique V_{M}(Nj') de ses noeuds premiers voisins Nj' au sein de son groupe. C'est de préférence le dispositif D associé à un noeud Nj qui est chargé de stocker toutes ces valeurs courantes reçues dans des moyens de stockage (non représentés). Ces derniers peuvent se présenter sous n'importe quelle forme connue de l'homme de l'art, et notamment sous la forme d'une mémoire, éventuellement de type logiciel ou fichier.

Une deuxième étape (ii), du procédé selon l'invention, consiste à choisir comme prochain noeud Nj (du groupe) devant faire l'objet d'opérations de maintenance au moins un noeud qui a la valeur courante de métrique la plus élevée (ou au contraire la moins élevée) de tous ses noeuds premiers voisins au sein du groupe.

Il est important de noter qu'à chaque première étape (i) il est possible de choisir plusieurs noeuds d'un groupe prédéfini (ceux ayant les meilleures ou les pires valeurs courantes de métrique). La seule contrainte est que deux noeuds premiers voisins appartenant à un même groupe ne peuvent pas être en maintenance en parallèle (et donc sensiblement simultanément).

On notera qu'au sein d'un noeud Nj, une deuxième étape (ii) peut être effectuée par le dispositif (de gestion) D associé. Dans ce cas, le dispositif D d'un noeud Nj est agencé pour comparer la valeur courante de métrique de son noeud Nj aux valeurs courantes de métrique de ses noeuds premiers voisins Nj' au sein du groupe, qui n'ont pas encore effectué leurs opérations de maintenance, afin d'élire ce noeud Nj prochain noeud devant faire l'objet d'opérations de maintenance lorsque sa valeur courante de métrique est la plus élevée (ou au contraire la moins élevée) de toutes celles reçues.

On notera également que dans cette deuxième étape (ii), lorsque au moins deux noeuds premiers voisins Nj et Nj' du groupe sont associés à des identifiants de communication (ici des adresses IP ou bien des identifiants OSPF) différents et ont une même valeur courante de métrique, et que cette même valeur courante est la plus, ou la moins, élevée, on peut choisir comme prochain noeud du groupe devant faire l'objet d'opérations de maintenance celui qui est associé au plus petit identifiant de communication. Mais, d'autres critères de choix peuvent être utilisés.

On notera également qu'une fois qu'un noeud Nj du groupe a transmis son premier message à ses noeuds premiers voisins Nj', il est avantageux qu'il attende pendant une durée prédéfinie avant d'effectuer la deuxième étape (ii). Cela permet d'être quasiment certain que chaque noeud Nj du groupe aura eu le temps de récupérer les valeurs courantes de métrique de ses noeuds premiers voisins Nj' au sein du groupe, afin que son dispositif D puisse les comparer à la valeur courante de métrique locale.

La deuxième étape (ii) est matérialisée par le losange référencé 20 dans l'exemple d'algorithme illustré sur la figure 1. On notera que dans ce losange 20 au lieu d'avoir le test "V_{M}(Nj) ≥V_{M}(Nj') ?" qui correspond au cas où on détermine si un noeud Nj possède la valeur courante de métrique V_{M}(Nj) la plus élevée, on pourrait avoir le test "V_{M}(Nj) ≤V_{M}(Nj')?" qui correspond au cas où on détermine si un noeud Nj possède la valeur courante de métrique V_{M}(Nj) la moins élevée.

Une troisième étape (iii), du procédé selon l'invention, consiste à transmettre de chaque noeud choisi Nj à chacun de ses noeuds premiers voisins Nj' un deuxième message destiné à signaler qu'il sera le prochain à effectuer ses opérations de maintenance, puis à interrompre momentanément la participation du noeud choisi Nj au processus décisionnel global de routage (ici OSPF), et enfin à déclencher ses opérations de maintenance au moyen d'un mécanisme choisi lorsque son tour survient.

A titre d'exemple actuellement préféré, le mécanisme choisi peut être de type dit "Open Shortest Path First - Graceful Restart" (ou OSPF-GR), lequel est défini par la règle RFC 3623 de l'IETF et présenté brièvement dans la partie introductrice. Mais, d'autres mécanismes choisis présentant des fonctionnalités similaires à OSPF-GR peuvent être utilisés.

Dans ce cas, il est avantageux que chaque noeud Nj du groupe génère lors de chaque première étape (i), par exemple à la requête de son dispositif D, un premier message de type "Grace - Link State Advertisement" (ou Grace-LSA) comportant un champ dédié additionnel de type "Type-Length-Value" (ou TLV) comprenant une valeur égale à sa propre valeur courante de métrique V_{M}(Nj). A titre d'exemple non limitatif, ce champ dédié additionnel de type TLV peut comporter un type ("Type") égal à 4, une longueur ("Length") égale à 2 et une valeur ("Value") égale à la valeur courante de métrique du noeud considéré.

De même, dans ce cas, il est avantageux que chaque noeud Nj du groupe génère lors d'une troisième étape (iii), par exemple à la requête de son dispositif D, un deuxième message de type Grace - Link State Advertisement (ou Grace-LSA) mais dépourvu du champ dédié additionnel. On comprendra que ce deuxième message est identique à celui qui est classiquement généré au moyen du protocole OSPF-GR par un noeud Nj (devant faire l'objet d'opérations de maintenance) pour signaler qu'il va très prochainement cesser d'échanger des messages avec ses noeuds premiers voisins Nj' pendant une durée maximale prédéfinie (ou "grace period"), et donc pour requérir que ces derniers (Nj') deviennent temporairement ses assistants (ou "helpers") au plus pendant toute la durée de cette durée maximale prédéfinie.

Il est important de noter qu'une troisième étape (iii) n'est mise en oeuvre qu'au niveau de chaque noeud Nj qui sera le prochain à faire l'objet d'opérations de maintenance. Les autres noeuds Nj' du même groupe n'effectuent donc pas cette troisième étape (iii) lorsque leur dispositif D s'est aperçu que leur propre valeur courante était moins élevée que la valeur courante reçue la plus élevée, ou bien plus élevée que la valeur courante reçue la moins élevée (selon le mode de réalisation choisi).

La troisième étape (iii) est matérialisée par le rectangle référencé 60 dans l'exemple d'algorithme illustré sur la figure 1.

On notera qu'un noeud Nj' d'un groupe n'est pas forcément un premier voisin d'un noeud choisi Nj (devant faire l'objet d'opérations de maintenance). Par conséquent, lorsqu'un noeud Nj' d'un groupe est un n-ième voisin (avec n > 1) d'un noeud choisi Nj (devant faire l'objet d'opérations de maintenance), il ne va pas recevoir de deuxième message. Il est donc préférable que chaque noeud Nj' d'un groupe, qui n'est pas initialement un noeud choisi Nj de ce groupe, soit mis dans une phase d'attente de réception de message consécutivement à une deuxième étape (ii). Cette phase d'attente est matérialisée par le rectangle référencé 30 dans l'exemple d'algorithme illustré sur la figure 1.

Le procédé selon l'invention peut également et de préférence comprendre une quatrième étape (iv) dans laquelle chaque noeud premier voisin Nj' d'un noeud choisi Nj (devant faire l'objet d'opérations de maintenance), et donc qui a reçu de ce dernier (Nj) un deuxième message, commence par transmettre à chacun de ses noeuds premiers voisins Nj" un troisième message destiné à leur signaler qu'il va servir d'assistant (ou helper) au redémarrage du noeud choisi Nj.

On comprendra qu'au sein d'un noeud Nj', une quatrième étape (iv) peut être initiée par le dispositif (de gestion) D associé lorsque son noeud Nj' a reçu un deuxième message d'un noeud choisi Nj (voisin et devant faire l'objet, comme lui, d'opérations de maintenance). Dans ce cas, le dispositif D d'un noeud Nj' est agencé pour ordonner à son noeud Nj' de transmettre à chacun de ses noeuds premiers voisins Nj" (hormis le noeud choisi Nj) un troisième message.

La quatrième étape (iv) est matérialisée par le rectangle référencé 40 dans l'exemple d'algorithme illustré sur la figure 1.

Le procédé selon l'invention peut également et de préférence comprendre une cinquième étape (v) dans laquelle, lorsqu'un noeud Nj" du groupe reçoit un troisième message d'un autre noeud Nj' de ce groupe, qui est un premier voisin d'un noeud choisi Nj (voisin et devant faire l'objet d'opérations de maintenance), il (par exemple son dispositif D) commence par supprimer ce dernier (Nj) d'une liste qui désigne ses noeuds premiers voisins qui appartiennent à son groupe et donc qui doivent également faire l'objet d'opérations de maintenance. Puis, il (D) détermine si la valeur courante de métrique de son noeud Nj" est la plus, ou la moins, élevée parmi celles des noeuds restant qui sont encore désignés dans cette liste (après suppression). On comprendra que cette suppression permet de déterminer si un autre noeud Nj" du groupe peut également faire l'objet d'opérations de maintenance, sensiblement en même temps qu'un noeud Nj qui a été initialement choisi. Si la valeur courante de métrique du noeud Nj" est désormais la plus, ou la moins, élevée de celles restantes, alors le dispositif D effectue la troisième étape (iii) [il ordonne donc à son noeud Nj" de transmettre à chacun de ses noeuds premiers voisins Nj' un deuxième message signalant qu'il sera le prochain à effectuer ses opérations de maintenance, puis interrompt momentanément la participation de son noeud Nj" au processus et finalement déclenche ses opérations de maintenance au moyen du mécanisme choisi lorsque son tour survient]. Dans le cas contraire, le dispositif D attend la réception d'un nouveau deuxième ou troisième message.

La cinquième étape (v) est matérialisée par le rectangle référencé 50 dans l'exemple d'algorithme illustré sur la figure 1.

On se réfère maintenant aux figures 2 à 7 pour présenter un exemple, non limitatif, de mise en oeuvre de l'invention dans le cas du groupe de cinq noeuds Nj illustré, devant faire l'objet d'opérations de maintenance.

Les flèches à double sens en pointillés, matérialisées sur la figure 2, illustrent schématiquement les échanges de premiers messages que font les cinq noeuds Nj pendant la première étape (i).

Les flèches circulaires en pointillés, matérialisées sur la figure 3, illustrent schématiquement les comparaisons de valeurs courantes de métrique qui sont effectuées pendant la deuxième étape (ii) par chaque dispositif D d'un noeud Nj dans le but de déterminer lequel d'entre eux sera le prochain noeud devant faire l'objet d'opérations de maintenance.

Sur la figure 4 on considère que c'est le noeud N3 qui a été choisi et donc qui sera le prochain à faire l'objet d'opérations de maintenance (il est ici matérialisé en gris clair à cet effet). Les flèches en pointillés, matérialisées sur la figure 4, illustrent donc schématiquement les transmissions d'un deuxième message qui sont effectuées par le noeud N3 pendant la troisième étape (iii), à destination de ses noeuds premiers voisins N1, N2 et N5, afin de leur signaler son prochain état et de leur demander de passer dans un mode d'assistant (ou helper). Les trois noeuds premiers voisins N1, N2 et N5 sont matérialisés par des nuages de petits points afin de signaler qu'ils sont désormais des assistants.

Les flèches en pointillés, matérialisées sur la figure 5, illustrent schématiquement les transmissions de troisièmes messages que font les trois noeuds premiers voisins N1, N2 et N5, à destination de leurs propres noeuds premiers voisins (hormis N3), pendant la quatrième étape (iv), afin de leur signaler qu'ils seront très prochainement et temporairement assistants (ou helpers) du noeud choisi N3.

Sur la figure 6 on considère qu'après une nouvelle comparaison de valeurs courantes pendant la cinquième étape (v), le dispositif D du noeud N4 s'aperçoit que ce dernier (N4) peut également faire prochainement l'objet d'opérations de maintenance (il est ici matérialisé en gris clair à cet effet), étant donné qu'il vient de supprimer de sa liste le noeud N2 qui était son premier voisin et donc que son noeud N4 est désormais celui qui présente la meilleure (ou la pire) valeur courante de métrique dans son voisinage. La flèche en pointillés, matérialisée sur la figure 6, illustre schématiquement la transmission d'un deuxième message que fait le noeud N4, qui est un premier voisin du noeud assistant N2, à destination de ce dernier (N2), pendant la cinquième étape (v), afin de lui signaler qu'il fera très prochainement l'objet d'opérations de maintenance et de lui demander de passer dans un mode d'assistant (ou helper).

La figure 7 illustre schématiquement la troisième étape (iii) pendant laquelle on effectue des opérations de maintenance au niveau des deux noeuds N3 et N4 déterminés au sein du groupe (et qui sont ici matérialisés en gris foncé à cet effet).

Si d'autres noeuds du groupe doivent faire également l'objet d'opérations de maintenance après les noeuds N3 et N4, on effectue de nouveau automatiquement les étapes du procédé une ou plusieurs fois sans tenir compte des valeurs courantes des noeuds ayant déjà fait l'objet d'opérations de maintenance, jusqu'à ce que tous les noeuds désignés initialement aient fait automatiquement l'objet d'opérations de maintenance. En d'autres termes, à chaque itération du procédé on "traite" au moins un noeud Nj d'un groupe, et les itérations cessent lorsque tous les noeuds d'un groupe ont été traités.

L'invention offre plusieurs avantages, parmi lesquels:
- elle permet d'étendre un mécanisme tel que OSPF-GR afin d'obtenir de façon automatisée un calcul et une coordination de façon distribuée d'opérations de re-démarrage multiples,
- elle permet d'automatiser complètement la planification des opérations de maintenance de groupe(s) de noeuds d'un réseau de communication, une fois que ce(s) groupe(s) a (ont) été défini(s), puis de déclencher automatiquement ces opérations de maintenance de façon distribuée,
- elle permet d'augmenter les performances et la fiabilité des opérations de maintenance, et de réduire les temps d'intervention des techniciens chargés de la maintenance.

L'invention ne se limite pas aux modes de réalisation de dispositif de gestion d'opérations de maintenance, d'équipement de réseau et de procédé de gestion d'opérations de maintenance décrits ci-avant, seulement à titre d'exemple, mais elle englobe toutes les variantes que pourra envisager l'homme de l'art dans le cadre des revendications ci-après.

## Revendications

1. Procédé de gestion d'opérations de maintenance, au moyen d'un mécanisme choisi, dans un groupe prédéfini de noeuds (Nj) d'un réseau de communication (RC), reliés entre eux et participant à un processus décisionnel global de routage, dans lequel on prévoit les étapes suivantes: (i) transmettre de chaque noeud (Nj) dudit groupe à chacun de ses noeuds premiers voisins (Nj') un premier message contenant la valeur courante d'une métrique choisie, (ii) choisir comme prochain noeud (Nj) dudit groupe devant faire l'objet d'opérations de maintenance au moins un noeud ayant la valeur courante de métrique la plus, ou la moins, élevée de tous ses noeuds premiers voisins au sein du groupe, et (iii) transmettre de chaque noeud choisi (Nj) à chacun de ses noeuds premiers voisins (Nj') un deuxième message signalant qu'il sera le prochain à faire l'objet d'opérations de maintenance, puis interrompre momentanément la participation audit processus dudit noeud choisi (Nj) et déclencher ses opérations de maintenance au moyen dudit mécanisme choisi lorsque son tour survient.

2. Procédé selon la revendication 1, dans lequel ledit mécanisme choisi est de type dit "Open Shortest Path First - Graceful Restart".

3. Procédé selon la revendication 2, dans lequel à l'étape (i) chaque noeud (Nj) dudit groupe génère un premier message de type "Grace - Link State Advertisement" comportant un champ dédié additionnel de type Type-Length-Value comprenant une valeur égale à sa valeur courante de métrique.

4. Procédé selon l'une des revendications 1 à 3, dans lequel on prévoit une étape (iv) dans laquelle chaque noeud premier voisin (Nj') d'un noeud choisi (Nj) transmet à chacun de ses noeuds premiers voisins (Nj") un troisième message signalant qu'il va servir d'assistant au redémarrage dudit noeud choisi (Nj).

5. Procédé selon la revendication 4, dans lequel on prévoit une étape (v) dans laquelle, lorsqu'un noeud (Nj") dudit groupe reçoit un troisième message d'un autre noeud (Nj') dudit groupe, premier voisin d'un noeud choisi (Nj), il supprime ce dernier (Nj) d'une liste désignant ses noeuds premiers voisins devant faire l'objet d'opérations de maintenance, puis détermine si sa valeur courante de métrique est la plus, ou la moins, élevée parmi celles des noeuds restant encore désignés dans ladite liste, et dans l'affirmative effectue l'étape (iii), ou bien dans la négative attend la réception d'un nouveau deuxième ou troisième message.

6. Procédé selon l'une des revendications 1 à 5, dans lequel à l'étape (ii) chaque noeud (Nj) dudit groupe compare sa valeur courante de métrique aux valeurs courantes de métrique de ses noeuds premiers voisins (Nj') au sein dudit groupe qui n'ont pas encore effectué leurs opérations de maintenance.

7. Procédé selon l'une des revendications 1 à 6, dans lequel à l'étape (ii) lorsque au moins deux noeuds premiers voisins dudit groupe sont associés à des identifiants de communication différents et ont une même valeur courante de métrique et que cette même valeur courante est la plus, ou la moins, élevée, on choisit comme prochain noeud (Nj) dudit groupe devant faire l'objet d'opérations de maintenance celui qui est associé au plus petit identifiant de communication.

8. Procédé selon l'une des revendications 1 à 7, dans lequel à l'étape (i) une fois qu'un noeud (Nj) dudit groupe a transmis son premier message à ses noeuds premiers voisins (Nj'), il attend pendant une durée prédéfinie avant d'effectuer ladite étape (ii).

9. Dispositif (D) de gestion d'opérations de maintenance, au moyen d'un mécanisme choisi, pour un noeud (Nj) d'un groupe prédéfini de noeuds d'un réseau de communication (RC), reliés entre eux et participant à un processus décisionnel global de routage, ledit dispositif (D) étant agencé i) pour ordonner à son noeud (Nj) de transmettre à chacun de ses noeuds premiers voisins (Nj') un premier message contenant la valeur courante d'une métrique choisie, ii) pour comparer la valeur courante de métrique de son noeud (Nj) aux valeurs courantes de métrique de ses noeuds premiers voisins (Nj') au sein dudit groupe, qui n'ont pas encore effectué leurs opérations de maintenance, afin d'élire ce noeud (Nj) prochain noeud (Nj) devant faire l'objet d'opérations de maintenance lorsque sa valeur courante de métrique est la plus, ou la moins, élevée, et iii) pour ordonner à son noeud (Nj) de transmettre à chacun de ses noeuds premiers voisins (Nj') un deuxième message signalant qu'il sera le prochain à faire l'objet d'opérations de maintenance, puis pour interrompre momentanément la participation de son noeud (Nj) audit processus et déclencher ses opérations de maintenance au moyen dudit mécanisme choisi lorsque son tour survient.

10. Dispositif selon la revendication 9, agencé pour déclencher des opérations de maintenance de son noeud (Nj) au moyen d'un mécanisme choisi de type dit "Open Shortest Path First - Graceful Restart".

11. Dispositif selon la revendication 10, agencé pour fournir à son noeud (Nj) sa valeur courante de métrique afin qu'il l'intègre à un premier message de type "Grace - Link State Advertisement" dans un champ dédié additionnel de type Type-Length-Value.

12. Dispositif selon l'une des revendications 9 à 11, agencé, lorsque son noeud (Nj) est un noeud premier voisin d'un prochain noeud (Nj'), pour ordonner à son noeud (Nj) de transmettre à chacun de ses noeuds premiers voisins (Nj") un troisième message signalant qu'il va servir d'assistant au redémarrage dudit prochain noeud (Nj').

13. Dispositif selon la revendication 12, agencé, lorsque son noeud (Nj) reçoit un troisième message d'un autre noeud (Nj") de ce groupe, qui est un premier voisin d'un noeud choisi (Nj'), pour supprimer ce dernier (Nj') d'une liste désignant ses noeuds premiers voisins devant faire l'objet d'opérations de maintenance, puis pour déterminer si sa valeur courante de métrique est la plus, ou la moins, élevée parmi celles des noeuds restant encore désignés dans ladite liste, et dans l'affirmative pour ordonner à son noeud (Nj) de transmettre à chacun de ses noeuds premiers voisins (Nj") un deuxième message signalant qu'il sera le prochain à effectuer ses opérations de maintenance, puis pour interrompre momentanément la participation de son noeud (Nj) audit processus et déclencher ses opérations de maintenance au moyen dudit mécanisme choisi lorsque son tour survient, ou bien dans la négative pour attendre la réception par son noeud (Nj) d'un nouveau deuxième ou troisième message.

14. Dispositif selon l'une des revendications 9 à 13, agencé, lorsque son noeud (Nj) présente une valeur courante de métrique identique à celle d'au moins un autre noeud premier voisin (Nj') de son groupe, et que cette valeur courante est la plus, ou la moins, élevée, pour élire son noeud (Nj) prochain noeud devant faire l'objet d'opérations de maintenance lorsqu'il est associé à un identifiant de communication qui est le plus petit de tous les identifiants de communication de ses noeuds premiers voisins au sein dudit groupe.

15. Equipement de réseau (Nj), propre à constituer un noeud d'un réseau de communication (RC) et à être relié à d'autres noeuds (Nj') de ce dernier (RC) participant à un processus décisionnel global de routage, ledit équipement de réseau (Nj) comprenant un dispositif de gestion (D) selon l'une des revendications 9 à 14.
